# EUROPÄISCHE PATENTANMELDUNG

(11) **EP 1 892 596 A2**
(43) Veröffentlichungstag der Anmeldung: **27.02.2008**
(21) Anmeldenummer: 07015673.2
(22) Anmeldetag: 09.08.2007
(51) Int. Cl.: G05B 19/418

(54) **System sowie Verfahren zur Organisation von zu bearbeitenden Werkstücken**

(30) Priorität: 22.08.2006 DE 102006039207
(71) Anmelder: Zwicker, Hans-Georg, 90409 Nürnberg (DE)
(72) Erfinder: Zwicker, Hans-Georg, 90411 Nürnberg (DE)
(74) Vertreter: Stippl, Hubert

(57) **Zusammenfassung**

Die vorliegende Erfindung betrifft ein System zur rechnergestützten Organisation von zu bearbeitenden Werkstücken in einem Produktionsprozess, bei dem das jeweilige Werkstück mindestens einer Bearbeitung vorzugsweise einer Mehrzahl von unterschiedlichen Bearbeitungen unterzogen wird, wobei jedem Werkstück (1) ein Werkstückplatz (2) zugeordnet ist, mindestens ein vorzugsweise mehrere Werkstückplätze (2) in einem Magazin (3) zusammengefasst sind, wobei jeder Werkstückplatz (2) Mittel zur Statusfeststellung des betreffenden Werkstückplatzes (2) aufweist, eine Steuereinheit (4) zur Ansteuerung der einzelnen Werkstückplätze (2) vorgesehen ist, eine Datenverarbeitungseinheit (5) vorgesehen ist, die mit der Steuereinheit (4) kommuniziert und in der die von den einzelnen Werkstückplätzen (2) abgefragten Informationen verarbeitet und Statusdaten generiert werden. Daneben betrifft die vorliegende Erfindung ein entsprechendes Verfahren.

## Beschreibung

Die vorliegende Erfindung betrifft ein System zur rechnergestützten Organisation von zu bearbeitenden Werkstücken sowie ein entsprechendes Organisationsverfahren.

Werkstücke werden in einem Produktionsprozess unterschiedlichsten Bearbeitungen, die von einer Vielzahl von unterschiedlichen Werkzeugen ausgeführt werden, unterworfen. Beispielsweise wird bei der Produktion einer Spritzgießform im Formenbau ausgehend von einem Rohling das betreffende Werkstück gebohrt, gefräst, drahterodiert und geschliffen, poliert und dergleichen. Hierbei befindet sich das betreffende Werkstück üblicherweise auf einem Werkstückträger, insbesondere auf einer so genannten "Palette", die als Basis für das Einspannen des Werkstücks in den Bearbeitungseinrichtungen dient. Der Produktivitätsdruck führt dazu, dass die Durchlaufzeiten von Werkstücken stets verkürzt sowie die Ausnutzung der Maschinen verbessert werden müssen. Darüber hinaus sollen Fehler im Produktionsprozess, z. B. aufgrund eines falschen Belegens eines Magazinplatzes durch den Operateur, eines notwendigen Nacharbeitens der Werkstücke oder durch Falschinformation der Steuerungen vermieden werden. Dies alles bedingt erhebliche Verzögerungen des Produktionsprozesses. Sofern es zu erforderlichen organisatorischen Änderungen im Produktionsprozess kommt, muss auf solche Änderungen rasch reagiert werden können.

Aus der US 2003/0055525 A1 ist ein System sowie ein Verfahren zur Herstellung von Kunststoffspritzgussformteilen bekannt. Dieses bekannte System umfasst eine Mehrzahl von sogenannten Subzellen, in denen jeweils eine Mehrzahl von Werkstücken bereitgehalten und bearbeitet werden, sowie eine übergeordnete Masterzelle mit einer zentralen Steuereinheit sowie einem zentralen Roboter zur Beschickung der in der Masterzelle bevorrateten Werkstücke an die einzelnen Subzellen. Jede einzelne Palette ist mit einer ID beispielsweise in Form eines Computerchips, eines Barcodes oder eines optischen Codes versehen. Die IDs gewährleisten, dass der Masterroboter die betreffenden Werkstücke anhand der ID der Palette identifizieren kann und damit das richtige Werkstück, zum Beispiel eine Spritzgussform oder eine Elektrode, mit dem dafür vorgesehenen richtigen Träger verbindet. Üblicherweise haben Entnahmeroboter eine Leseeinheit an deren Greifarm. Hiermit sind jedoch sehr lange Identifikationszeiten verbunden. Während dieser Zeit kann der Roboter keine Maschine be- oder entladen. Wenn ein Operateur auf das Magazin sieht, erkennt dieser lediglich freie sowie belegte Werkstückplätze. Der Operateur kann allerdings nicht erkennen, welcher Werkstückplatz tatsächlich frei ist (im Gegensatz zu einem solchen Werkstückplatz, der lediglich vorübergehend nicht belegt ist, da das Werkstück gerade in der Maschine bearbeitet wird). Dies stellt eine den Ablauf nachteilig beeinträchtigende Unsicherheitsquelle dar.

In dem Sonderdruck aus Werkzeug- und Formenbau 5, 05 MI Verlag moderne Industrie ist das MES-System Winstat beschrieben, bei dem jede Palette, d. h. jeder Elektrodenhalter ein berührungsloses Identifikationssystem in Form eines Transponders besitzt. Am Anfang der Bearbeitung wird das Werkstück als Rohling auf der Palette montiert und die ID der Palette über einen tragbaren PC im System registriert. Dann können die für die vorgesehene Bearbeitung erforderlichen Bearbeitungsprogramme vom System in Abhängigkeit der eingelesenen ID abgerufen werden. Dem vorgenannten Stand der Technik gemeinsam ist es, dass zwar bereits Paletten vom System identifiziert werden, allerdings nach wie vor die Auswahl oder Zuordnung von Paletten zu Werkstückplätzen im Betrieb vom Operateur sozusagen von Hand erfolgt bzw. ausgehend von der zentralen Datenverarbeitungseinheit eine Auswahl des betreffenden Werkstückhaltertyps als solchem stattfindet.

Die Aufgabe der vorliegenden Erfindung besteht darin, ein gattungsgemäßes System sowie Verfahren zur rechnergestützten Organisation von zu bearbeitenden Werkstücken in einem Bearbeitungsprozess zur Verfügung zu stellen, bei dem eine automatisierte Handhabung von Werkstücken bei erhöhter Prozesssicherheit durchgeführt werden kann und gleichzeitig die Durchlaufzeiten von Werkstücken in komplexen Bearbeitungsprozessen erheblich verkürzt werden können.

Die vorstehende Aufgabe wird bei dem gattungsgemäßen System dadurch gelöst, dass jeder Werkstückplatz Mittel zur Statusfeststellung des betreffenden Werkstückplatzes aufweist, eine Steuereinheit zur Ansteuerung der einzelnen Werkstückplätze vorgesehen ist und eine Datenverarbeitungseinheit, vorzugsweise eine zentrale Datenverarbeitungseinheit, vorgesehen ist, die mit der Steuereinheit kommuniziert und in der die von den einzelnen Werkstückplätzen abgefragten Informationen verarbeitet und Statusdaten generiert werden. Hierdurch wird sichergestellt, dass nicht lediglich eine Identifikation des Werkstücks, z.B. einer zu bearbeitenden Form oder Elektrode, über die zugehörige Palette stattfindet, sondern in dem Gesamtsystem auch gleichzeitig eine Feststellung dahingehend getroffen wird, in welchem Status sich jeder einzelne Werkstückplatz im Magazin befindet. Diese Information wird von der Datenverarbeitungseinheit im Zuge der Verwaltung des Gesamtprozessablaufs verwaltet und bei der Steuerung des Prozessablaufs mit einbezogen. Hierdurch ergibt sich ein im Vergleich zu dem bisher bekannten System bzw. Verfahren deutlicher Optimierungsgrad hinsichtlich Schnelligkeit sowie Sicherheit.

Die Statusfeststellung des Werkstückplatzes betrifft zweckmäßigerweise die Feststellung, ob sich ein Werkstück am Werkstückplatz befindet oder nicht. Es ist somit hierdurch nicht notwendig, dass ein Entnahmeroboter jedes Mal eine Identifikation dahingehend durchzuführen hat. Hierdurch wird ein wesentlich schnellerer Produktionsablauf gewährleistet.

Die Statusfeststellung des Werkstückplatzes betrifft zudem oder alternativ die Feststellung, ob ein Werkstück vom Werkstückplatz entnommen werden darf oder nicht und/oder eingebracht werden kann oder nicht. Die vorgenannte Statusfeststellung bewirkt, dass zeitaufwendige Fehlentnahmen oder Fehlbelegungen von Werkzeugplätzen ausgeschlossen werden.

Zusätzlich kann hierzu jeder Werkstückplatz eine Verriegelungseinrichtung aufweisen, die in Abhängigkeit des festgestellten Status des betreffenden Werkstückplatzes das Werkstück am Werkstückplatz verriegelt, so dass es nicht versehentlich entnommen werden kann.

Die Statusfeststellung des Werkstückplatzes betrifft zudem oder alternativ eine Information über die Eigenschaften des Werkstückes, insbesondere über Abmessungen des Werkstücks und/oder Ausrichtungsdaten des Werkstücks zur Palette. Diese Informationen werden zweckmäßigerweise über eine optische Vermessungseinrichtung gewonnen. Daraus resultiert wiederum der Vorteil, dass die Datenverarbeitungseinheit daraus erkennt, dass z. B. aufgrund einer Übergröße des zu bearbeitenden Werkstücks an den benachbarten Werkstückplätzen des Magazins kein Werkstück eingesetzt werden darf. Die Einrichtung zur Ermittlung dieser zusätzlichen Informationen kann sich am Magazin befinden, so dass jeder einzelne Magazinplatz bzw. das darin befindliche Werkstück optisch ausgelesen werden kann. Theoretisch ist es allerdings möglich, auch eine Auslesung z. B. der Abmessungen des Werkstücks bzw. dessen Positionierung an der Palette an einem anderen Ort auszulesen und die diesbezüglichen Daten der Datenverarbeitungseinheit zuzuführen.

Darüber hinaus ist es vorteilhaft, wenn jedem Werkstückplatz eine Objektreferenz zugeordnet wird, so dass die Werkstückplätze in der zentralen Datenverarbeitungseinheit objektreferenzbezogen verwaltet werden können.

Zweckmäßigerweise ist als Mittel zur Statusfeststellung ein Empfangsteil, vorzugsweise an dem jeweiligen Werkstückplatz vorgesehen, mittels welchem die Statusdaten generiert werden können bzw. welches als Grundlage für die Generierung der Statusdaten dient.

Vorzugsweise handelt es sich bei dem Empfangsteil um eine Leseantenne für die Identifizierung eines Transponders, z.B. eines RFID-Transponder-Chips der 125 kHz Technologie, der sich an der Palette oder am Werkstück befindet. Die Leseantenne ermöglicht es, die ID des am Werkstückplatz befindlichen Werkstücks einschließlich weiterer für den Herstellungsprozess relevanter Daten, wie z.B. einer Objektreferenz oder dergleichen, einzulesen und über die Steuereinheit der Datenverarbeitungseinheit zuzuführen. Aufgrund der Verwendung einer Leseantenne zur Identifizierung eines Transponders ist es möglich, bereits bestehende Produktionsanlagen in technisch einfacher Art und Weise nachzurüsten.

Bevorzugt ist der Transponder an einem Werkstückträger, insbesondere an der so genannten Palette des Werkstücks, oder, sofern das Werkstück unmittelbar in den Werkstückplatz eingesetzt werden sollte, am Werkstück selbst angebracht.

Jeder Werkstückplatz ist zweckmäßigerweise mit einem hierzu gehörigen Empfangsteil ausgestattet. Das System besitzt folglich "intelligente" Werkstückplätze, die in der Lage sind, die Statusdaten sämtlicher Werkstückplätze dem Produktionsprozess zur Verfügung zu stellen.

Gemäß dem erfindungsgemäßen System sind in vorteilhafter Weise für eine Mehrzahl von Werkstückplätzen eine Mehrzahl von Mitteln zur Statusfeststellung vorzugsweise in Form einer Reihenschaltung, d. h. Stichleitung, wobei die einzelnen Mittel zur Statusfeststellung eines jeden Werkstückplatzes von der Steuereinheit über eine einzige Schnittstelle vorzugsweise zyklisch ausgelesen werden. Hierdurch können in technisch einfacher Weise eine Vielzahl von Werkstückplätzen von der Steuereinheit ausgelesen werden. Die Erfindung ermöglicht es, bis zu 280 Werkstückplätze über eine solche "Kette" innerhalb von Sekunden auszulesen.

Gemäß einer weiteren Ausgestaltung des erfindungsgemäßen Systems sind unterschiedliche Magazine, die jeweils eine Vielzahl entsprechend ausgerüsteter Werkstückplätze aufweisen, von einer Steuereinheit über Magazin-zugehörige Schnittstellen abzufragen. Die Steuereinheit ist daher in der Lage, eine Mehrzahl von Magazinen, die beispielsweise an unterschiedlichen Plätzen an einem Produktionsstandort positioniert sind, zu steuern.

Die Energieversorgung der einzelnen Mittel zur Statusfeststellung des jeweiligen Werkstückplatzes erfolgt über die Steuereinheit.

Gemäß einer zweckmäßigen Ausgestaltung ist für jeden Werkstückplatz zusätzlich eine eigene optische Statusanzeige vorgesehen. Diese ermöglicht es dem Operateur, auf einfache Art und Weise festzustellen, in welchem aktuellen Status sich der betreffende Werkstückplatz momentan befindet. Dies umfasst insbesondere auch die Feststellung, ob ein Werkstückplatz mit einem Fehler behaftet ist, beispielsweise durch falsche manuelle Bestückung oder das Werkstück aus organisatorischen Maßnahmen nicht entnommen werden soll. Fehler im Rahmen des Produktionsprozesses können damit schnell festgestellt und aufgrund dessen sicher vermieden werden.

Die jeweilige Charakteristik der Statusanzeige, d.h. die Art der Statusdaten und/oder die Art der Anzeige sind in der Datenverarbeitungseinheit einheitlich festlegbar. Die Verwaltung der Statusanzeigen erfolgt zentral. Vom jeweiligen Werkstückplatz her kann die Statusanzeige nicht beeinflusst werden.

Zweckmäßigerweise erfolgt die Statusanzeige über unterschiedliche Leuchteinrichtungen, z.B. LED's unterschiedlicher Farbe, wobei die jeweilige Kombination (z.B. rot sowie grün und/oder Einschaltkombination (ein bzw. aus)) dem Operateur den jeweiligen Status vermittelt.

Weiterhin umfasst das System eine Mehrzahl einzelner aus mindestens einem oder mehreren Magazinen und je einer zugehörigen Steuereinheit aufgebauten Funktionseinheiten, die mit einer zentralen Datenverarbeitungseinheit kommunizieren. Derartige Funktionseinheiten können beispielsweise an verschiedenen Standorten vorgesehen sein. Hierdurch wird somit eine standortübergreifende Optimierung des Funktionsprozesses erreicht.

Die Kommunikation der jeweiligen Funktionseinheit mit der zentralen Datenverarbeitungseinheit kann auf verschiedene Art und Weise erfolgen. Besonders zweckmäßig ist eine Netzwerkverbindung, vorzugsweise eine sogenannte Wireless-LAN (WLAN)-Verbindung. Eine Verbindung über öffentliche Netze (z.B. Internet) oder private Netze (z.B. Intranet oder dergleichen) ist auch möglich.

Es ist jeweils ein Werkstück auf einer Palette befestigbar. Alternativ sind auch mehr Werkstücke auf einer Palette befestigbar.

Weiterhin kann die Steuereinheit einer jeden Funktionseinheit eine besondere Schnittstelle umfassen, die für Diagnosezwecke, z.B. zum Anschluss einer Diagnoseeinheit und/oder für die Durchführung einer Basiskonfiguration vorgesehen ist, umfassen.

Zweckmäßigerweise sind mehrere zu einer Gruppe zusammengefasste Werkstückplätze relativ zum Magazin ortsbeweglich ausgebildet. Beispielsweise kann hierzu der Werkstückplatz oder die Gruppe mehrerer Werkstückplätze in Form eines Wagens oder Läufers ortsbeweglich ausgebildet sein. Mittels des Wagens oder Läufers kann der Werkstückplatz bzw. können die Werkstückplätze von anderen Positionen im Werk dem betreffenden Magazin auf einfache Weise zugeführt werden. Ebenso kann der Werkstückplatz bzw. die Gruppe mehrerer Werkstückplätze auch als tragbare Einheit ausgebildet sein.

Zur Lösung der vorgenannten Aufgabe ist bei dem gattungsgemäßen Verfahren vorgesehen, dass der jeweilige Werkstückplatz von einer Steuereinheit angesteuert wird, der jeweilige Werkstückplatz abgefragt in Form von Statusdaten ausgelesen wird und die abgefragten Daten an eine Datenverarbeitungseinheit übermittelt werden und daraus Statusdaten zu dem jeweiligen Werkstückplatz generiert werden.

Weitere zweckmäßige Ausgestaltungen des erfindungsgemäßen Verfahrens ergeben sich aus den Ansprüchen 22 - 26.

Eine zweckmäßige Ausgestaltung des erfindungsgemäßen Systems sowie Verfahren wird anhand von Zeichnungsfiguren nachstehend näher erläutert. Der Übersichtlichkeit halber sind wiederkehrende Merkmale lediglich einmal mit einem Bezugszeichen versehen.

### Es zeigen

- Fig. 1: ein auf einer Palette positioniertes Werkstück in Form einer in einem Produktionsprozess herzustellenden Spritzgussform, welche ausgehend vom Rohling in verschiedenen Bearbeitungsstufen (Figur 1A - 1C) bearbeitet worden ist, in stark vereinfachter Darstellungsweise;
- Fig. 2: eine Gesamtdarstellung der einzelnen Bestandteile des erfindungsgemäßen Systems in stark vereinfachter Darstellungsweise.
- Fig. 3: eine Darstellung eines einzelne mit Paletten bestückten Werkstückplätze umfassenden Magazins;
- Fig. 4: eine Darstellung einer aus einem Magazin sowie einer Steuereinheit bestehenden Funktionseinheit sowie
- Fig. 5: eine Darstellung einer Mehrzahl von einzelnen Funktionseinheiten, die mit der zentralen Datenverarbeitungseinheit zusammenwirken.

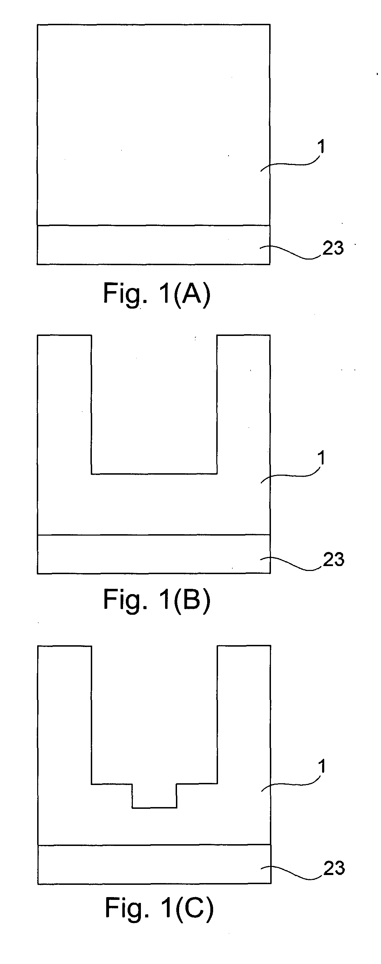

Fig. 1 zeigt in stark vereinfachter, schematischer Darstellungsweise verschiedene Bearbeitungsstufen eines Werkstücks in Form einer Spritzgussform für eine Spritzgussmaschine. Bezugsziffer 1 bezeichnet das Werkstück, welches zunächst als Rohling gemäß Fig. 1 (A) den Ausgangspunkt für den Herstellungsprozess bildet.

Die Bezugsziffer 23 kennzeichnet eine Palette, die als Trag- bzw. Befestigungsbasis für das Werkstück 1 in den unterschiedlichen Bearbeitungseinrichtungen dient. Nach der Endbearbeitung des Werkstücks 1 wird das Werkstück 1 von der Palette 23 getrennt.

Ausgehend von dem in Figur 1A gezeigten Rohling wird dieser unterschiedlichen Bearbeitungsschritten unterzogen. So wird zunächst gemäß Fig. 1 (B) z.B. mittels eines Fräswerkzeugs eine großvolumige Ausnehmung an der Oberseite des Rohlings erzeugt. Diese Bearbeitung erfolgt in einer eigens dafür vorgesehenen Fräsmaschine. Anschließend wird das Werkstück 1 einer weitergehenden Bearbeitung zugeführt, in dem am Grund der Ausnehmung eine weitere Ausnehmung beispielsweise über einen Bohrvorgang gemäß Fig. 1 (C) eingebracht wird. Durch nacheinander stattfindende Bearbeitungsmaßnahmen unterschiedlichster Art wird das Werkstück 1 nach und nach in seine endgültige Form gebracht und durchläuft daher eine Mehrzahl von einzelnen Bearbeitungsschritten. Die Bearbeitungsschritte in den Fig. 1 (A) - 1 (C) zeigen stark vereinfachte schematische Darstellungen. In der Praxis werden derartige Werkstücke 1 einer Vielzahl von einzelnen Bearbeitungsstationen (Bohrstationen, Frässtationen, Drahterodierstationen, Schleifstationen, Polierstationen etc.) zugeführt. Darüber hinaus werden eine Vielzahl identischer oder aber auch unterschiedlicher Werkstücke im Rahmen eines Produktionsprozesses bearbeitet.

Während dieser verschiedenen Bearbeitungen bleibt das Werkstück 1 und die Palette 23 üblicherweise miteinander in Verbindung. Sämtliche Leseantennen 9 werden von der Steuereinheit 4 zyklisch abgefragt.

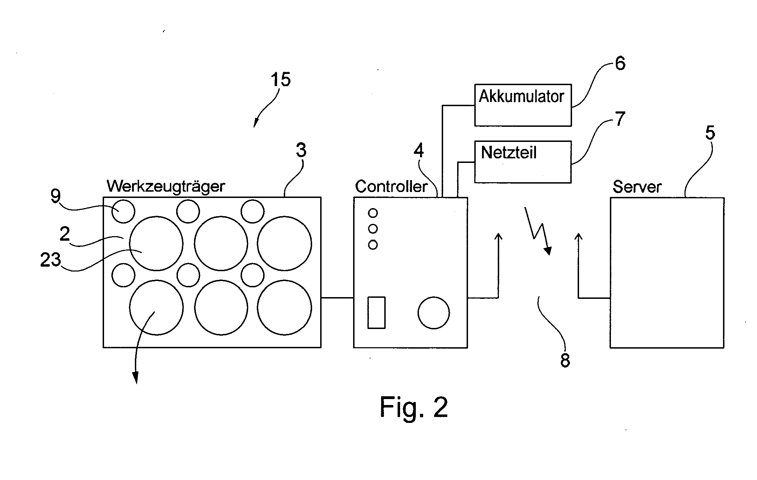

Fig. 2 zeigt eine Gesamtdarstellung des erfindungsgemäßen Systems zur rechnergestützten Organisation von zu bearbeitenden Werkstücken in einem Produktionsprozess. Bezugsziffer 3 kennzeichnet ein Magazin, welches z.B. insgesamt sechs Werkstückplätze 2 umfasst. Jeder Werkstückplatz 2 ist dazu vorgesehen, eine Palette 23 mit einem oder mehreren Werkstück(en), welche(s) im Produktionsprozess bearbeitet werden soll(en), aufzunehmen. Der Pfeil in Fig. 2 deutet an, dass die Paletten 23 vom Magazin 3 entnehmbar sind.

Jedem Werkstückplatz 2 zugeordnet ist ein Mittel zur Statusfeststellung des betreffenden Werkstückplatzes, vorzugsweise gemäß Fig. 2 in Form einer sogenannten Leseantenne 9. Dem Magazin 3 zugeordnet ist eine Steuereinheit 4, die über ein Netzteil 7 mit elektrischem Strom versorgt wird. Zusätzlich zum Netzteil 7 ist ein Akkumulator 6 vorgesehen, welcher die Energieversorgung gewährleistet bzw. eine Energieversorgung bei Stromausfall sicherstellt.

Vom System ferner umfasst ist eine Datenverarbeitungseinheit 5, z.B. ein Server, der mit der Steuereinheit 4 über eine geeignete Datenverbindung kommuniziert. Bei dieser Datenverbindung handelt es sich zweckmäßigerweise um eine Netzwerkverbindung insbesondere um eine Wireless-LAN (WLAN) Verbindung. Das Magazin 3 und die Steuereinheit 4 bilden zusammen eine Funktionseinheit 15.

In der Datenverarbeitungseinheit 5 werden die Produktionsdaten zentral verwaltet und von dort aus an die betreffenden Prozesseinheiten, insbesondere Bearbeitungseinheiten abgegeben.

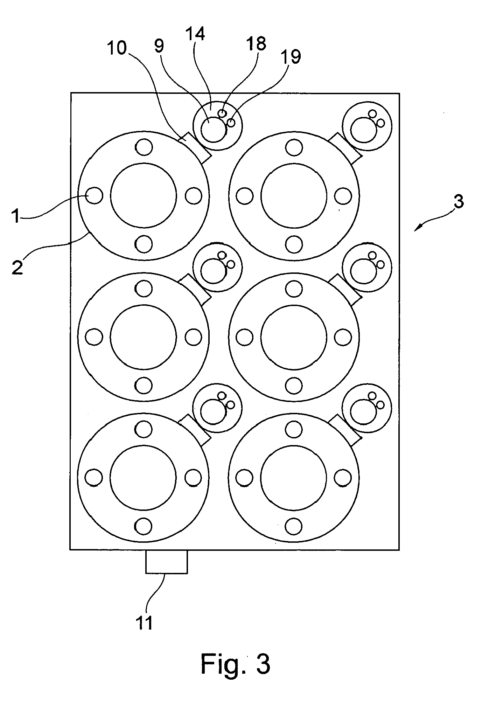

Das Magazin 3 umfasst gemäß Fig. 3 an jedem Werkstückplatz 2 eine dem betreffenden Werkstückplatz 2 zugeordnete Leseantenne 9, die in der Lage ist, ein am jeweiligen Werkstückplatz 2 eingesetztes Werkstück über dessen Transponder 10, der in der Ausgestaltung nach Figur 3 an der insgesamt vier Werkstücke 1 aufnehmenden Palette 23 permanent befestigt ist, zu identifizieren. Bei der Leseantenne 9 handelt es sich zweckmäßigerweise um eine solche, die in der Lage ist, Transponderchips (RFID-Chips) der 125 kHz Technologie einzulesen.

Die Leseantenne 9 kann in einfacher Art und Weise in geeignetem Abstand zum Werkstückplatz 2 bzw. Werkstück 1 am Magazin 3 befestigt werden. Jeder Werkstückplatz 2 ist mit einer entsprechenden Leseantenne 9 ausgestattet. Sämtliche Leseantennen 9 des Magazins 3 werden vorzugsweise in einer Serienschaltung bzw. Stichleitung über eine Schnittstelle 11 mit der Steuereinheit 4 (Fig. 2) verbunden. Die betreffende Leseantenne 9 tastet den Transponder 10 der am zugehörigen Werkstückplatz 2 befindlichen Palette 23 ab.

Jede Leseantenne weist eine optische Statusanzeige 14 in Form zweier LED's 18, 19 auf. Die LED 18 leuchtet beispielsweise grün, die LED 19 leuchtet beispielsweise rot. Durch Festlegung des Einschaltzustandes wird von der optischen Anzeige 14 dem Operateur ein Hinweis über den jeweiligen Status des Werkstückplatzes 2 mitgeteilt. Die optische Anzeige 14 in Form der beiden LED's 18, 19 sowie die Leseantenne 9 sind zweckmäßigerweise als gekapselte Baueinheit vorgesehen und an geeigneter Stelle im Bereich des zugehörigen Werkstückplatzes 2 angeordnet, z.B. aufgeklebt.

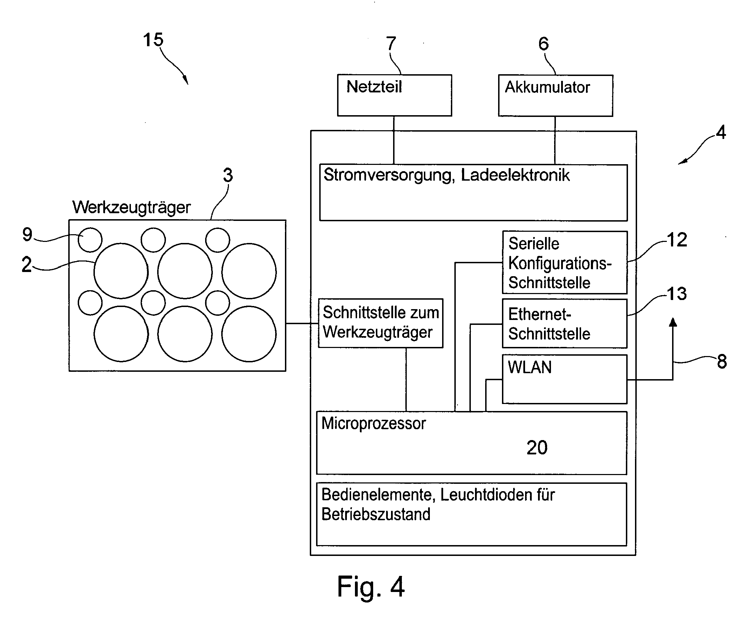

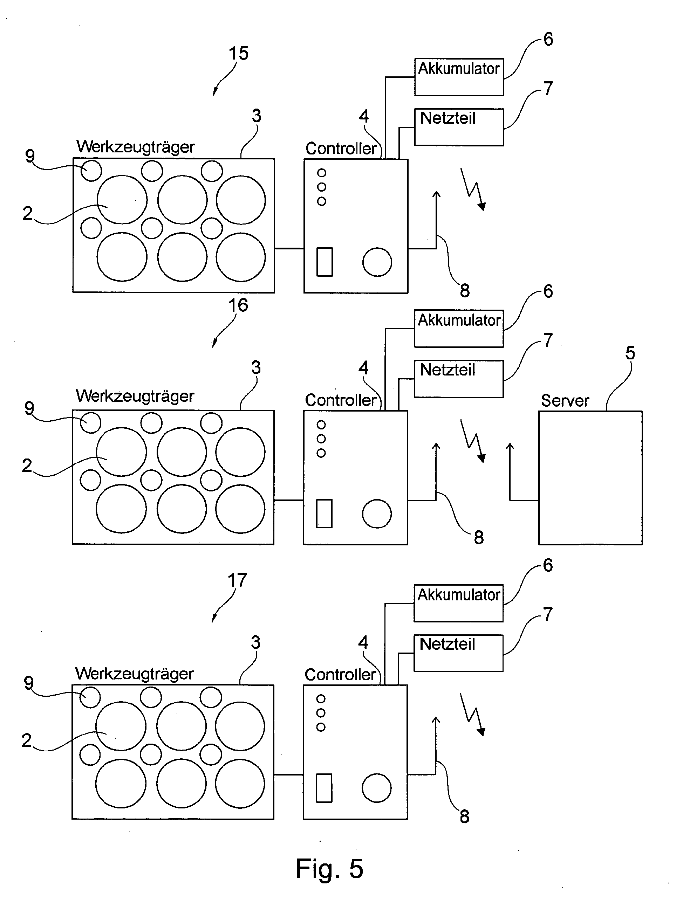

Fig. 4 zeigt eine detailliertere Darstellung der die einzelnen Werkstückplätze steuernden Steuereinheit 4. Die Steuereinheit 4 umfasst einen Mikroprozessor 20, der zum einen für das Abfragen der einzelnen Leseantennen 9 am Magazin 3 sorgt, zum anderen die vom Magazin 3 abgefragten Informationen aufbereitet und über eine Datenverbindung, im vorliegenden Fall über ein Netzwerk 8 z.B. über WLAN an die in Fig. 5 nicht dargestellte Datenverarbeitungseinheit 5 abgibt. Die Stromversorgung der Steuereinheit 4 erfolgt über das Netzteil 7 oder wahlweise, wie bereits eingangs beschrieben, über den Akkumulator 6. Die einzelnen Leseantennen 9 sind mit der Schnittstelle 11 der Steuereinheit 4 über eine (nicht dargestellte) Stichleitung verbunden. Die Steuereinheit 4 steuert zum einen die Leseantennen 9 zum anderen kommuniziert sie mit der Datenverarbeitungseinheit 5, die als Statusdatengenerierer, -verwalter sowie Steuerzentrale arbeitet.

Gemäß der Erfindung können ein oder mehrere Magazine 3 über jeweils zugehörige Schnittstellen mit dem Mikroprozessor 20 der Steuereinheit 4 verbunden sein. Die einzelnen Leseantennen werden untereinander nach Art eine Kette mit vorzugsweise gleichlangen Kabelstücken vernetzt und mit der Schnittstelle 11 der Steuereinheit 4 verbunden.

Die Steuereinheit 4 wird in einem eigenen Gehäuse verbaut und ist mit dem Werkzeugträger 3 oder weiteren (nicht dargestellten) Magazinen 3 fest verbunden.

Beispielsweise kann die Steuereinheit 4 eine Mehrzahl, insbesondere mindestens fünf Schnittstellen umfassen, wobei pro Schnittstelle ein Magazin 3 mit bis zu vierzig Leseantennen 9 d.h. Werkstückplätzen 2 angeschlossen werden. Bei fünf Kommunikationsschnittstellen ergibt sich eine Gesamtzahl von 200 Leseantennen 9, die von der Steuereinheit 4 angesteuert werden können.

Die serielle Schnittstelle 12 dient vorzugsweise zur Basiskonfigurierung der Steuereinheit 4 sowie für Diagnosezwecke des Systems. Beim Einsatz von WLAN erfolgt die Kommunikationsschnittstelle nach 802.11b.

Ferner ist eine Ethernet-Schnittstelle 13 vorgesehen, über die ebenfalls eine Datenverbindung zu einer Datenverarbeitungseinheit 5 möglich ist.

Gemäß Fig. 5 sind mehrere Funktionseinheiten 15, 16 sowie 17, bestehend aus je einem Magazin 3 sowie einer Steuereinheit 4 pro Funktionseinheit vorgesehen, wobei die einzelnen Funktionseinheiten 15, 16 sowie 17 über ihre zugehörige Steuereinheit 4 über ein Netzwerk 8 z.B. per WLAN mit der Datenverarbeitungseinheit 5 kommunizieren. Die einzelnen Funktionseinheiten können ggf. sogar an unterschiedlichen Standorten eingesetzt werden.

Des Weiteren umfasst das vorbeschriebene System eine (in den Zeichnungsfiguren nicht dargestellte) optische Einrichtung zur Erfassung der Dimension des Werkstücks 1 und/oder der Positionierung des Werkstücks 1 relativ zur Palette 23. Diese Daten werden ebenfalls der Datenverarbeitungseinheit 5 zugeführt. Anhand dieser Information ist es möglich, zu erkennen, ob ein benachbarter Werkstückplatz 2 beispielsweise aufgrund einer übermäßigen Dimension des betreffenden Werkstücks 1 freigehalten werden muss oder nicht. Derartige optische Erfassungseinrichtungen können sich an jedem Werkstückplatz befinden. Alternativ kann auch eine bewegliche Einrichtung vorgesehen sein, die mit jedem Werkstückplatz 2 verbunden werden kann. Alternativ ist es auch denkbar, von einer von dem Werkstückplatz 2 bzw. Magazin 3 losgelösten zentralen Vermesseinheit auszugehen.

Ferner kann (alternativ zu den Ausgestaltungen der Zeichnungsfiguren) ein Werkstückplatz allein oder eine Gruppe oder mehrere zu einer Gruppe zusammengefasste Werkstückplätze relativ zum Magazin 3 ortsbeweglich ausgebildet sein. Beispielsweise kann sich der Werkzeugplatz auf einem Wagen oder Läufer befinden, so dass er von einer bestimmten Stelle in einem Werk in einfacher Weise zu einer anderweitigen Stelle, an der der Werkstückplatz gerade benötigt wird, bewegt werden kann. Gleiches gilt für eine Gruppe mehrerer Werkstückplätze.

Nachstehend soll die Funktion sowie das betreffende Verfahren näher beschrieben werden. Die Steuerung aller im Netzwerk eingebundener Magazine 3 geschieht über die Datenverarbeitungseinheit 5. Die Netzwerkkommunikation zwischen der zentralen Datenverarbeitungseinheit 5 und dem jeweiligen Steuereinheit 4 erfolgt diskontinuierlich, beispielsweise alle 15 Sekunden. Über die Steuereinheit 4 erfolgen folgende Steuerungen:
(a) Abfrage, welcher Werkstückplatz und/oder Palette 23 momentan im System eingebunden bzw. angemeldet ist. Die Paletten 23 werden über zugehörige Objektreferenzen angesprochen. Über die Objektreferenz kann ständig und ohne weitere Netzwerkkommunikation die ID der betreffenden Palette 23 abgefragt werden.
(b) Statusabfrage eines einzelnen Werkstückplatzes. Diese Funktion ermöglicht es zu überprüfen, ob der jeweilige Werkstückplatz "erreichbar" ist, d.h. ob eine Kommunikation mit dem Werkstückplatz möglich ist. Bei erfolgreicher Kommunikation werden folgende Informationen geliefert:
   - die Firmwareversion der Palette/Controllers
   - eine ID anhand derer die Palette identifiziert werden kann
   - Anzahl der Werkstückplätze
   - Zustand der Versorgungsspannung
(c) Abfrage der momentan von einer Palette erfassten Werkstücke. Pro Bestückungsplatz wird entweder die ID des Werkstücks mit Status "freigegeben" oder "gesperrt", "geliefert" oder der Status "nicht vorhanden" ausgegeben, falls an der jeweiligen Position kein Werkstück eingesetzt ist.

Was die Anzeige anbelangt, sind zweckmäßigerweise folgende Anzeigezustände vorgesehen:

| Rote LED | Grüne LED | Bedeutung |
|---|---|---|
| Aus | Aus | Es ist kein Werkstück eingesetzt |
| Aus | Ein | Es ist ein Werkstück eingesetzt. Dieses darf entnommen werden |
| Ein | Aus | Es ist ein Werkstück eingesetzt. Dieses darf jedoch nicht entnommen werden. Es ist gesperrt |
| Ein | Ein | Der Leseantenne ist momentan aktiv und versucht den Transponder eines Werkstücks zu lesen. Dieser Vorgang dauert ca. 100 Millisekunden |

Um die Netzwerkkommunikation so gering wie möglich zu halten, ist es ferner möglich, eine Call-Back-Funktion einzurichten, die der aufrufenden Anwendung Änderungen in der Werkstückbestückung der Palette bzw. des Magazins mitteilt. Darüber hinaus kann auf einen Simulationsmodus umgeschaltet werden, der es erlaubt, völlig auf physikalisch vorhandene Paletten zu verzichten.

Die vorliegende Erfindung macht es möglich, ein System zur rechnergestützten Organisation von zu bearbeitenden Werkstücken in einem Produktionsprozess hinsichtlich der Geschwindigkeit der Bearbeitungsabläufe einerseits sowie andererseits hohe Produktionssicherheit zu gewährleisten. Die Erfindung stellt daher einen ganz wesentlichen Beitrag auf dem einschlägigen Gebiet der Technik dar.

### BEZUGSZEICHENLISTE

- 1: Werkstück
- 2: Werkstückplatz
- 3: Magazin
- 4: Steuereinheit
- 5: Datenverarbeitungseinheit
- 6: Akkumulator
- 7: Netzteil
- 8: Netzwerk
- 9: Leseantenne
- 10: Transponder
- 11: Schnittstelle
- 12: serielle Schnittstelle
- 13: Ethernet-Schnittstelle
- 14: Optische Anzeige
- 15: Funktionseinheit
- 16: Funktionseinheit
- 17: Funktionseinheit
- 18: LED
- 19: LED
- 20: Mikroprozessor
- 21: Ethernet-Schnittstelle
- 22: Serielle Schnittstelle
- 23: Palette

## Patentansprüche

1. System zur rechnergestützten Organisation von zu bearbeitenden Werkstücken in einem Produktionsprozess, bei dem das jeweilige Werkstück mindestens einer Bearbeitung vorzugsweise einer Mehrzahl von unterschiedlichen Bearbeitungen unterzogen wird, wobei jedem Werkstück (1) ein Werkstückplatz (2) zugeordnet ist, mindestens ein vorzugsweise mehrere Werkstückplätze (2) in einem Magazin (3) zusammengefasst sind,
**dadurch gekennzeichnet, dass**
jeder Werkstückplatz (2) Mittel zur Statusfeststellung des betreffenden Werkstückplatzes (2) aufweist,
eine Steuereinheit (4) zur Ansteuerung der einzelnen Werkstückplätze (2) vorgesehen ist,
eine Datenverarbeitungseinheit (5) vorgesehen ist, die mit der Steuereinheit (4) kommuniziert und in der die von den einzelnen Werkstückplätzen (2) abgefragten Informationen verarbeitet und Statusdaten generiert werden.

2. System nach Anspruch 1,
**dadurch gekennzeichnet, dass**
die Statusfeststellung des Werkstückplatzes (2) die Feststellung betrifft, ob sich ein Werkstück (1) im Werkstückplatz (2) befindet oder nicht.

3. System nach Anspruch 1 oder 2,
**dadurch gekennzeichnet, dass**
die Statusfeststellung des Werkzeugplatzes (2) die Feststellung betrifft, ob ein Werkstück (1) vom Werkstückplatz (2) entnommen werden darf oder nicht.

4. System nach einem der Ansprüche 1-3,
**dadurch gekennzeichnet, dass**
die Statusfeststellung des Werkstückplatzes (2) die Feststellung betrifft, ob ein Werkstück (1) in den Werkstückplatz (2) eingebracht werden kann oder nicht.

5. System nach einem der Ansprüche 1-4,
**dadurch gekennzeichnet, dass**
die Statusfeststellung des Werkstückplatzes (2) die Feststellung betrifft, welche Qualität das Werkstück (1) aufweist.

6. System nach einem der Ansprüche 1 bis 5,
**dadurch gekennzeichnet, dass**
als Mittel zur Statusfeststellung ein Empfangsteil vorgesehen ist.

7. System nach Anspruch 6,
**dadurch gekennzeichnet, dass**
als Empfangsteil eine Leseantenne (9) für die Identifizierung eines Transponders vorgesehen ist.

8. System nach Anspruch 6 oder 7,
**dadurch gekennzeichnet, dass**
das Empfangsteil am Werkstückplatz (2) positioniert ist.

9. System nach Anspruch 8,
**dadurch gekennzeichnet, dass**
der Transponder (10) an einem Werkstückträger, insbesondere einer Palette (23) oder am Werkstück (1) selbst angebracht ist.

10. System nach einem der vorhergehenden Ansprüche,
**dadurch gekennzeichnet, dass**
für eine Mehrzahl von Werkstückplätzen (2) eine Mehrzahl von Mittel zur Statusfeststellung vorgesehen sind, die von der Steuereinheit (4) über eine Schnittstelle (11) ausgelesen werden.

11. System nach einem der vorhergehenden Ansprüche,
**dadurch gekennzeichnet, dass**
die Mittel zur Statusfeststellung des jeweiligen Werkstückplatzes (2) von der Steuereinheit (4) mit Energie versorgt werden.

12. System nach einem der vorhergehenden Ansprüche,
**dadurch gekennzeichnet, dass**
der Werkstückplatz (2) eine optische Status-Anzeige (14) aufweist.

13. System nach Anspruch 11,
**dadurch gekennzeichnet, dass**
die Charakteristik der Status-Anzeige (14) in der Datenverarbeitungseinheit (5) zentral festlegbar und über die Steuereinheit (4) auf die Status-Anzeige (14) übertragbar ist.

14. System nach Anspruch 12 oder 13,
**dadurch gekennzeichnet, dass**
bei der Verwaltung der Status-Anzeige (14) in der Datenverarbeitungseinheit (5) der Gesamtproduktionsablauf mit einbezogen wird.

15. System nach einem der Ansprüche 12 - 14,
**dadurch gekennzeichnet, dass**
die Status-Anzeige (14) mindestens eine, vorzugsweise mehrere, z.B. zwei Leuchteinrichtungen unterschiedlicher Art und/oder insbesondere unterschiedlicher Farbe, umfasst und die Festlegung des Informationsinhalts durch Festlegung von unterschiedlichen Zustandskombinationen der Leuchteinrichtungen erfolgt.

16. System nach einem der vorhergehenden Ansprüche,
**dadurch gekennzeichnet, dass**
das System eine Mehrzahl einzelner, aus mindestens einer oder mehreren Magazinen (3) und je einer Steuereinheit (4) aufgebauter Funktionseinheiten (15, 16, 17) umfasst, die mit der Datenverarbeitungseinheit (5) kommuniziert.

17. System nach Anspruch 14,
**dadurch gekennzeichnet, dass**
die Kommunikation der Funktionseinheit (15, 16 und/oder 17) und mit der zentralen Datenverarbeitungseinheit (5) über eine Netzwerkverbindung, vorzugsweise über WLAN erfolgt.

18. System nach einem der Ansprüche 12 - 17,
**dadurch gekennzeichnet, dass**
die Charakteristik der Status -Anzeige (14) vom Werkstückplatz (2) aus nicht beeinflussbar ist.

19. System nach einem der vorhergehenden Ansprüche,
**dadurch gekennzeichnet, dass**
der Werkstückplatz (2) eine Halte- oder Verriegelungseinrichtung für das Werkstück (1) aufweist, die in Abhängigkeit des festgestellten Status des Werkstückplatzes (2) das betreffende Werkstück (1) am Werkstückplatz (2) verriegelt hält bzw. verriegelt.

20. System nach einem der vorhergehenden Ansprüche,
**dadurch gekennzeichnet, dass**
der Werkstückplatz (2) allein oder eine Gruppe mehrerer Werkstückplätze (2) relativ zum Magazin (3) ortsbeweglich sind.

21. Verfahren zur rechnergestützten Organisation von zu bearbeitenden Werkstücken in einem Produktionsprozess, bei dem das jeweilige Werkstück unterschiedlichen Bearbeitungen unterzogen wird, wobei
(a) Werkstücke einzelnen Werkstückplätzen zugeordnet sind,
(b) mindestens ein Werkzeugplatz, vorzugsweise eine Mehrzahl von Werkstückplätzen in einem Magazin zusammengefasst ist,
**dadurch gekennzeichnet, dass**
(c) der jeweilige Werkstückplatz von einer Steuereinheit angesteuert wird,
(d) der jeweilige Werkstückplatz abgefragt und
(e) die abgefragten Daten an eine Datenverarbeitungseinheit übermittelt werden und daraus Statusdaten zu dem jeweiligen Werkstückplatz generiert werden.

22. Verfahren nach Anspruch 21,
**dadurch gekennzeichnet, dass**
über die Ermittlung der Statusdaten eine Abfrage erfolgt, welche Werkstückplätze momentan im Bearbeitungsprozess eingebunden sind.

23. Verfahren nach Anspruch 21 oder 22,
**dadurch gekennzeichnet, dass**
die ID des jeweiligen Werkstücks vom Werkstückplatz aus ausgelesen wird und eine Datenkopplung der ID des jeweiligen Werkstücks mit den Statusdaten des jeweiligen Werkstückplatzes erfolgt.

24. Verfahren nach einem der Ansprüche 21-23,
**dadurch gekennzeichnet, dass**
ausgehend von der Datenverarbeitungseinheit eine Freigabe oder Sperrfunktion an dem Werkstückplatz festlegbar und übermittelbar ist.

25. Verfahren nach einem der Ansprüche 21-24,
**dadurch gekennzeichnet, dass**
der Status der einzelnen Werkstückplätze am Werkstückplatz optisch angezeigt wird.

26. Verfahren nach einem der Ansprüche 21 - 25,
**dadurch gekennzeichnet, dass**
Statusänderungen von Werkstückplätzen aufgrund des Bearbeitungsablaufs, insbesondere selbsttätig, der Datenverarbeitungseinheit mitgeteilt werden.
